(19) **Europäisches Patentamt / European Patent Office / Office européen des brevets**

(11) **EP 1 364 707 B1**

(12) **FASCICULE DE BREVET EUROPEEN**

(45) Date de publication et mention
de la délivrance du brevet:
**13.03.2019 Bulletin 2019/11**

(21) Numéro de dépôt: **03291104.2**

(22) Date de dépôt: **09.05.2003**

(51) Int Cl.:
*B01J 23/888* (2006.01)       *B01J 23/882* (2006.01)
*B01J 23/883* (2006.01)       *B01J 27/051* (2006.01)
*B01J 27/047* (2006.01)       *B01J 27/043* (2006.01)
*B01J 35/10* (2006.01)       *C10G 45/00* (2006.01)

(54) **CATALYSEUR D'HYDRORAFFINAGE ET/OU D'HYDROCONVERSION ET PROCÉDÉ D'HYDROTRAITEMENT DE CHARGES HYDROCARBONÉES À L'AIDE DUDIT CATALYSEUR**

KATALYSATOR ZUR HYDROBEHANDLUNG UND/ODER HYDROKONVERSION UND HYDROBEHANDLUNGSVERFAHREN UNTER VERWENDUNG DES BESAGTEN KATALYSORS

HYDROTREATING AND/OR HYDROCONVERSION CATALYST AND PROCESS FOR HYDROTREATMENT OF HYDROCARBONS USING SAID CATALYST

(84) Etats contractants désignés:
**DE DK FR GB NL**

(30) Priorité: **24.05.2002 FR 0206402**

(43) Date de publication de la demande:
**26.11.2003 Bulletin 2003/48**

(73) Titulaire: **IFP Energies nouvelles
92500 Rueil-Malmaison (FR)**

(72) Inventeurs:
- **Harlé, Virginie
  60260 Lamorlaye (FR)**
- **Rouleau, Loic
  69390 Charly (FR)**
- **Kressmann, Stéphane
  69360 Sérézin du Rhone (FR)**

- **Guillaume, Denis
  92500 Rueil Malmaison (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A- 0 704 239       EP-A- 0 714 699
EP-A- 1 060 794       FR-A- 2 764 213
US-A- 4 743 574**

Remarques:
Le dossier contient des informations techniques présentées postérieurement au dépôt de la demande et ne figurant pas dans le présent fascicule.

EP 1 364 707 B1

**Description**

La présente invention concerne un catalyseur d'hydroraffinage et/ou d'hydroconversion de charges hydrocarbonées contenant des composés dont le point d'ébullition est supérieur à 520°C et contenant du soufre et éventuellement des métaux ainsi que son utilisation dans des procédés d'hydroraffinage et/ou d'hydroconversion de charges lourdes. Un résidu pétrolier de distillation atmosphérique (RA) ou de distillation sous vide (RSV) ou une huile désasphaltée (DAO) sont des charges représentatives des charges traitées dans le cadre de cette invention.

Art antérieur

L'homme du métier sait qu'il est souhaitable de convertir ces fractions lourdes contenant des composés dont le point d'ébullition est supérieur à 520°C en fractions plus légères plus rentables économiquement. Par ailleurs, l'hydroraffinage ou l'hydroconversion de ces charges permet également de les purifier et notamment de fortement diminuer leur teneur en soufre grâce aux réactions d'hydrodésulfuration (HDS) ainsi que leur teneur en métaux, essentiellement nickel et vanadium, grâce aux réactions d'hydrodémétallation (HDM).

Les catalyseurs les plus performants pour réaliser ces réactions sont composés de phases sulfures dispersées sur un support oxyde poreux. Les sulfures mixtes composés à la fois d'un sulfure d'un métal du groupe VIB du tableau périodique ainsi que d'un sulfure d'un métal du groupe VIII du tableau périodique sont particulièrement adaptés aux réactions d'hydroraffinage.

Il est également connu de l'homme du métier que la texture poreuse du support doit être adaptée afin de prendre en compte les limitations diffusionnelles rencontrées lors de l'hydroraffinage/hydroconversion de ces fractions lourdes. Il est maintenant reconnu qu'il est préférable de réaliser ces réactions avec un catalyseur bimodal contenant à la fois des mésopores et des macropores. Nous définissons les mésopores comme des pores de diamètre inférieur à 500 Å et les macropores comme des pores de diamètre supérieur à 500 Å, la porosité étant mesurée par la méthode d'intrusion du mercure.

Ces catalyseurs présentent une désactivation importante au cours du temps. Cette désactivation est en partie liée à l'accumulation de dépôts solides dans les pores du catalyseur, dépôt qui se poursuit jusqu'au bouchage complet d'une partie du réseau poreux du catalyseur. Les dépôts sont constitués à la fois de résidus carbonés insolubles dans le toluène que l'on qualifie de coke et de sulfure de vanadium et de nickel, ces derniers provenant des réactions d'hydrodémétallation. Ces dépôts sont plus concentrés à la périphérie des grains de catalyseurs qu'en leur centre. De même, les bouches de pores s'obstruent plus vite que leurs autres parties. L'obstruction des pores va de pair avec une réduction progressive de leur diamètre, ce qui entraîne une limitation accrue de la diffusion des molécules, donc une accentuation de l'hétérogénéité du dépôt depuis la périphérie vers l'intérieur des particules poreuses au point que l'obstruction complète des pores débouchant à l'extérieur des grains de catalyseur se produit rapidement : le catalyseur est alors désactivé.

US 4,880,525 décrit par exemple la préparation d'un catalyseur bimodal typiquement utilisé dans ce type d'application. Il est constitué de macropores (au moins 20 % du volume poreux dans des pores de taille supérieure à 350 Å) et de mésopores de taille modérée puisque au moins 20 % du volume poreux doit être développé dans des mésopores de taille inférieure à 70 Å. D'après EP 1 060 794, la présence d'au moins 0,32 cm$^3$/g de macropores (supérieur à 500 Å) ainsi que des mésopores de taille moyenne comprise entre 80 et 200 Å permet d'obtenir un catalyseur présentant à la fois une forte activité initiale et une forte capacité de rétention en métaux et ainsi une large durée de vie. La proportion de macropores est sujette à débat puisque selon US 5,397,456, il existe un compromis entre augmentation de la macroporosité pour faciliter la diffusion des grosses molécules et diminution de la macroporosité pour limiter l'empoisonnement de l'intérieur des grains. Selon ces auteurs, 11 à 18 % du volume poreux présent dans des pores de taille supérieure à 250 Å serait une bonne proportion. Par ailleurs, selon US 5,827,421, un catalyseur présentant un large volume poreux (0,82 à 0,98 cm$^3$/g) ainsi que la particularité d'avoir de grands mésopores (55 à 64,5 % du volume poreux entre 110-130 Å +/-50 Å) et une large fraction de macropores (27 à 34 % du volume poreux au-dessus de 250 Å) serait particulièrement performante lorsqu'il s'agit de maximiser la conversion de ces charges tout en limitant la formation de sédiments dans les produits de conversion et en maximisant leur désulfuration.

La demande de brevet EP0704239A1 décrit une composition catalytique comprenant un support oxyde poreux, 2 à 8% poids d'un métal du groupe VIB choisi parmi le molybdène et le tungstène, ce qui correspond à une teneur en oxyde de molybdène comprise entre 3,1 et 12,3% poids, 0,5 à 2,5% poids d'un métal du groupe VIII choisi parmi le nickel et le cobalt, ce qui correspond à une teneur en oxyde de nickel comprise entre 0,7 et 2,6% poids, une distribution poreuse mesurée par adsorption d'azote telle que le volume poreux total est compris entre 0,5 et 1 ml/g, le diamètre moyen est compris entre 180 et 300 A. Aucune condition n'est fixée sur la valeur que doit prendre le rapport atomique entre l'élément du groupe VIII non noble et l'élément du groupe VIB.

Alors que l'impact de la répartition poreuse du catalyseur sur la performance a largement été étudié, il est rarement fait mention de l'effet de la quantité de phase active et surtout de la proportion entre les éléments introduits.

Le rapport atomique entre l'élément du groupe VIII et l'élément du groupe VI considéré comme optimal usuellement est compris entre 0.4 et 0.6 atomes groupe VIII/atomes groupe VI. Nous avons observé qu'indépendamment de la texture poreuse du catalyseur, la désactivation du catalyseur est ralentie, et ainsi la durée de vie du catalyseur est allongée, lorsque la teneur en métal du groupe VIII est limitée. Sans vouloir élaborer une quelconque théorie sur la désactivation, on peut penser que la diminution de la teneur en métal du groupe VIII limite l'activité chimique du catalyseur et ainsi permet une meilleure diffusion des molécules à l'origine des dépôts au sein du catalyseur. Les dépôts sont alors plus uniformément répartis dans le volume du catalyseur et le bouchage de la porosité est retardé. Ainsi le rapport atomique groupe VIII/groupe VI est avantageusement choisi inférieur à 0,4 atomes/atomes. Un rapport atomique préféré est égal à 0,3 atomes/atomes.

Description de l'invention

L'invention concerne un catalyseur d'hydroraffinage et/ou d'hydroconversion de charges hydrocarbonées contenant des composés dont le point d'ébullition est supérieur à 520°C, du soufre et des métaux.

Conformément à l'invention, ledit catalyseur comprend :

- un support poreux :,
- de 1 à 30 % poids d'au moins un métal catalytique choisi parmi les éléments du groupe VIB du tableau périodique en quantité exprimée en % poids d'oxyde par rapport au poids du catalyseur final et
- de 0 à moins de 2,2 % poids d'au moins un métal catalytique non noble choisi parmi les éléments du groupe VIII en quantité exprimée en % oxyde par rapport au poids du catalyseur final,

et dans lequel le rapport atomique entre l'élément du groupe VIII non noble et l'élément du groupe VIB est inférieur à 0,4, le volume poreux total mesuré par porosimétrie au mercure est compris entre 0,5 et 1,5 cm3/g, et la distribution des mésopores du support est centrée sur un diamètre compris entre 40 et 170 Å,. la surface BET du catalyseur est supérieure à 50 m2/g et le volume poreux du catalyseur dans les pores de diamètre supérieur à 500 Å est d'au moins 0,1 cm3/g.

Le catalyseur selon l'invention contient un support poreux, en général essentiellement à base d'alumine, et au moins un métal catalytique choisi parmi les éléments du groupe VIB et éventuellement au moins un métal catalytique non noble choisi parmi les éléments du groupe VIII du tableau périodique.

De préférence, le métal du groupe VIB est le molybdène ou le tungstène, de manière encore plus préférée le molybdène. De préférence, le métal du groupe VIII est le nickel ou le cobalt, de manière encore plus préférée le nickel. Un catalyseur avantageux est un catalyseur associant nickel et molybdène. Un autre catalyseur avantageux est un catalyseur à base de molybdène.

Selon l'invention, la quantité de métal du groupe VIB, exprimée en % poids d'oxyde par rapport au poids du catalyseur final, peut être comprise entre 1 et 30 %, de préférence entre 5 et 20 %.

Selon l'invention, la quantité de métal du groupe VIII non noble, exprimée en % poids d'oxyde par rapport au poids du catalyseur fini, est comprise entre 0 et moins de 2,2 % poids, de manière préférée entre 0 et moins de 2 %, et de manière encore plus préférée entre 0 et moins de 1,9 %.

La quantité de métal du groupe VIII non noble, exprimée en % poids d'oxyde par rapport au poids du catalyseur fini, est généralement d'au moins 0,1 %, voire supérieure à 0,1 %. Dans un mode de réalisation, le catalyseur ne contient pas de métal du groupe VIII non noble (0% poids d'oxyde par rapport au poids du catalyseur fini).

Un catalyseur très préféré comprend une quantité de métal du groupe VIII non noble, exprimée en % poids d'oxyde par rapport au poids du catalyseur fini, comprise entre 0,1 et 1,9 %.

Selon l'invention, le rapport atomique entre l'élément du groupe VIII non noble et l'élément du groupe VIB est choisi inférieur à 0,4 atomes/atomes, avantageusement inférieur à 0,35 atomes/atomes. Un rapport atomique préféré est égal ou inférieur à 0,3 atomes/ atomes. Les catalyseurs selon l'invention peuvent être préparés par toutes méthodes adéquates. D'une façon préférée, le support, par exemple une alumine commerciale, est imprégné par une solution aqueuse contenant les sels métalliques.

De façon plus particulière, le procédé de préparation du catalyseur supporté de la présente invention comprend les étapes suivantes :

a) on imprègne le support, par exemple une alumine commerciale par une solution aqueuse contenant les métaux du groupe VIB et du groupe VIII,
b) on laisse reposer le solide humide sous une atmosphère humide à une température comprise entre 10 et 80°C,
c) on sèche le solide obtenu à l'étape b) à une température comprise entre 60 et 150°C,
d) on calcine le solide obtenu à l'étape c) à une température comprise entre 150 et 800°C.

L'imprégnation de la matrice est de préférence effectuée par la méthode d'imprégnation dite "à sec" bien connue de l'homme du métier. L'imprégnation est effectuée de manière très préférée en une seule étape par une solution contenant l'ensemble des éléments constitutifs du catalyseur final (co-imprégnation). D'autres séquences d'imprégnation peuvent être mises en oeuvre pour obtenir le catalyseur de la présente invention.

Il est également possible d'introduire une partie des métaux, voire la totalité, au cours de la préparation du support, notamment durant l'étape de mise en forme.

Les sources des éléments du groupe VIB qui peuvent être utilisées sont bien connues de l'homme du métier. Par exemple, parmi les sources de molybdène et de tungstène, on peut avantageusement utiliser les oxydes, les hydroxydes, les acides molybdiques et tungstiques et leurs sels en particulier les sels d'ammonium tels que le molybdate d'ammonium, l'heptamolybdate d'ammonium, le tungstate d'ammonium, les acides phosphomolybdique et phosphotungstique et leurs sels, les acétylacétonates, les xanthates, les fluorures, les chlorures, les bromures, les iodures, les oxyfluorures, les oxychlorures, les oxybromures, les oxyiodures, les complexes carbonyles, les thiomolybdates, les carboxylates. On utilise de préférence les oxydes et les sels d'ammonium tels que le molybdate d'ammonium, l'heptamolybdate d'ammonium et le tungstate d'ammonium.

Les sources des éléments du groupe VIII pouvant être utilisées sont connues et sont par exemple les nitrates, les sulfates, les phosphates, les halogénures, les carboxylates comme les acétates et les carbonates, les hydroxydes et les oxydes.

Le catalyseur de la présente invention renferme également une matrice minérale poreuse habituellement amorphe ou mal cristallisée. Elle est généralement choisie dans le groupe formé par l'alumine, la silice, la silice-alumine, la magnésie, l'argile, l'oxyde de titane, l'oxyde de zirconium, l'oxyde de lanthane, l'oxyde de cérium, les phosphates d'aluminium, les phosphates de bore, ou un mélange d'au moins deux des oxydes cités ci-dessus. On peut également choisir les combinaisons alumine-oxyde de bore, alumine-oxyde de titane, alumine-zircone et oxyde de titane-zircone, les aluminates, de magnésium, de calcium, de baryum, de manganèse, de fer, de cobalt, de nickel, de cuivre et de zinc ainsi que les aluminates mixtes et les titanates (de zinc, de nickel et de cobalt) seuls ou en mélange.

On préfère utiliser des matrices contenant de l'alumine, sous toutes ces formes connues de l'Homme du métier, par exemple l'alumine gamma.

Les catalyseurs décrits dans la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée. Ils peuvent être également utilisés sous la forme de billes.

Ils présentent généralement une surface spécifique mesurée par adsorption d'azote selon la méthode BET (Brunauer, Emmett, Teller, J. Am. Chem. Soc., vol. 60, 309-316 (1938)) comprise entre 50 et 600 m$^2$/g, un volume poreux mesuré par porosimétrie au mercure compris entre 0,5 et 1,5 cm$^3$/g, de manière encore plus préférée entre 0,5 et 1 cm$^3$/g. La distribution en taille de pores, mesurée par porosimétrie au mercure peut être monomodale, bimodale ou polymodale, les porosités contenant des macropores étant préférables. La porosimétrie au mercure est réalisée dans une gamme de pression d'intrusion du mercure de 1,8 à 60 000 PSI, avec un angle de mouillage du mercure de 140° et une tension superficielle de 480 dyne/cm$^2$.

Selon l'invention, le volume poreux total dudit catalyseur mesuré par porosimétrie au mercure est compris entre 0,5 et 1,5 cm3/g,

Selon l'invention, la surface BET du catalyseur est supérieure à 50 m$^2$/g et le volume poreux correspondant aux pores de diamètre supérieur à 500 Å est d'au moins 0,1 cm$^3$/g. Selon l'invention, la distribution des mésopores du support utilisé pour le catalyseur selon l'invention est centrée sur un diamètre compris entre 40 et 170 Å.

Ce catalyseur peut être mis en oeuvre dans tout type de procédé permettant de convertir des charges contenant des composés dont le point d'ébullition est supérieur à 520°C et contenant également du soufre et éventuellement des métaux. Les charges peuvent être par exemple des résidus atmosphériques ou des résidus sous vide issus de distillation directe, des huiles désasphaltées, des résidus issus de procédés de conversion tels que par exemple ceux provenant du coking, d'une hydroconversion en lit fixe, en lit bouillonnant ou encore en lit mobile. Ces charges peuvent être utilisées telles quelles ou encore diluées par une fraction hydrocarbonée ou un mélange de fractions hydrocarbonées choisies dans le groupe formé par une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry et les fractions gazoles notamment celles obtenues par distillation sous vide dénommée selon la terminologie anglo-saxonne VGO (Vacuum Gas Oil). Les charges lourdes présentent généralement des points d'ébullition initiaux supérieurs à 300°C, plus de 1 % poids de molécules ayant un point d'ébullition supérieur à 520°C, une teneur en S supérieure à 1 % poids, une teneur en azote supérieure à 100 ppm poids, une teneur en métaux Ni+V supérieure à 1 ppm poids, une teneur en asphaltènes, précipité dans l'heptane, supérieure à 0,2 % poids ainsi que des viscosités importantes, typiquement plus de 10 Cst à 100°C.

Dans un mode de réalisation, une partie des effluents convertis peut être recyclée en amont de l'unité opérant le procédé d'hydroconversion / hydroraffinage.

Ce catalyseur peut être mis en oeuvre notamment dans un procédé en lit fixe, dont l'objectif essentiel est d'éliminer les métaux, le soufre et d'abaisser le point d'ébullition moyen de ces hydrocarbures. Dans un procédé en lit fixe, le catalyseur est généralement mis en oeuvre à une température comprise entre 320 et 450°C, de préférence 350 à 410°C, sous une pression partielle d'hydrogène d'environ 3 MPa à environ 30 MPa, de préférence 10 à 20 MPa, à une vitesse spatiale d'environ 0.05 à 5 volumes de charge par volume de catalyseur et par heure, de préférence 0,2 à 0,5 volume de charge par volume de catalyseur et par heure, et avec un rapport hydrogène gazeux sur charge liquide d'hydrocarbures compris entre 200 et 5000 normaux mètres cubes par mètre cube, de préférence 500 à 1500 normaux mètres cubes par mètre cube.

Le catalyseur de la présente invention peut également être mis en oeuvre dans un procédé en lit bouillonnant sur les mêmes charges. Dans un tel procédé, le catalyseur est généralement mis en oeuvre à une température comprise entre 320 et 470°C, de préférence 400 à 450°C, sous une pression partielle d'hydrogène d'environ 3 MPa à environ 30 MPa, de préférence 5 à 20 MPa, à une vitesse spatiale d'environ 0,1 à 10 volumes de charge par volume de catalyseur et par heure, de préférence 0,5 à 2 volumes de charge par volume de catalyseur et par heure, et avec un rapport hydrogène gazeux sur charge liquide d'hydrocarbures compris entre 100 et 3000 normaux mètres cubes par mètre cube, de préférence 200 à 1200 normaux mètres cubes par mètre cube.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

Les exemples suivants illustrent l'invention décrite dans ce brevet sans toutefois en limiter la portée.

Exemple 1 : Préparation du support N° 1 rentrant dans la composition des catalyseurs de l'invention.

Nous avons fabriqué un support à base d'alumine en grande quantité de façon à pouvoir préparer les catalyseurs décrits dans les exemples suivants à partir du même support mis en forme. Pour ce faire, nous avons utilisé une matrice composée de boehmite ou gel d'alumine commercialisée sous le nom de Versai 250 par la société La Roche. Ce gel a été mélangé à une solution aqueuse contenant de l'acide nitrique à 52,7 % (1 % poids d'acide par gramme de gel sec) puis malaxé pendant 20 minutes dans un malaxeur à bras en Z (Aoustin MX2). La pâte a été ensuite mélangée avec une solution aqueuse contenant de l'ammoniaque à 20,3 % (40 % mol d'ammoniaque par mole d'acide) pendant 5 minutes dans le même malaxeur. A l'issue de ce malaxage, la pâte obtenue est passée à travers une filière ayant des orifices cylindriques de diamètre égal à 1,0 mm sur une extrudeuse piston (Retma). Les extrudés sont ensuite séchés une nuit à 120°C puis calcinés à 750°C pendant deux heures sous un débit d'air humide contenant 200 g d'eau / kg d'air sec.

On obtient ainsi des extrudés cylindriques de 0,9 mm de diamètre, ayant une surface spécifique de 190 $m^2/g$, un volume poreux total de 0,95 $cm^3/g$, une distribution de mésopores centrée sur 140 Å. Cette alumine contient en outre 0,28 $cm^3/g$ de volume poreux dans des pores de diamètre supérieur à 500 Å.

Exemple 2 : Préparation du support N° 2 rentrant dans la composition des catalyseurs de l'invention.

La préparation du support N° 2 est identique à celle du support N° 1 si ce n'est que le traitement thermique final des extrudés a été moins poussé de façon à obtenir un support de plus petite taille de mésopores. Le traitement thermique a été réalisé sous air sec à 600°C pendant deux heures. Les extrudés de 0,9 mm de diamètre développent une surface spécifique de 260 $m^2/g$, un volume poreux total de 0,93 $cm^3/g$, une distribution de mésopores centrée sur 100 Å. Cette alumine contient en outre 0,27 $cm^3/g$ de volume poreux dans des pores de diamètre supérieur à 500 Å.

Exemple 3 : Préparation du catalyseur A1 supporté sur le support N°1 de l'exemple 1.

Nous avons imprégné à sec le support extrudé de l'exemple 1 par une solution aqueuse renfermant des sels de molybdène et de nickel. Le sel de molybdène est l'heptamolybdate d'ammonium $(NH_4)_6Mo_7O_{24}.4H_2O$ et celui de nickel le nitrate de nickel $Ni(NO_3)_2.6H_2O$. Après maturation à température ambiante dans une atmosphère saturée en eau, les extrudés imprégnés sont séchés pendant une nuit à 120°C puis calcinés à 500°C pendant 2 heures sous air sec. La teneur finale en trioxyde de molybdène est de 12,5 % poids du catalyseur fini. La teneur finale en oxyde de nickel NiO est de 3,1 % poids du catalyseur fini.

Les caractéristiques texturales du catalyseur A1 sont reportées dans le tableau 1.

Tableau 1

| Catalyseur | A1 | B1 | C2 | D2 |
|---|---|---|---|---|
| $MoO_3$ (% pds) | 12,5 | 12,9 | 9,7 | 10,1 |
| NiO (% pds) | 3,1 | 1,7 | 3,2 | 0 |
| Ni/Mo (at/at) | 0,48 | 0,25 | 0,63 | 0 |
| $S_{BET}$ ($m^2$/g) | 165 | 166 | 225 | 223 |
| Vpt ($cm^3$/g) | 0,81 | 0,82 | 0,84 | 0,84 |
| V Hg > 500 Å ($cm^3$/g) | 0,26 | 0,26 | 0,27 | 0,28 |

Exemple 4 : Préparation du catalyseur B1 supporté sur le support N°1 de l'exemple 1.

Nous avons imprégné à sec le support extrudé de l'exemple 1 par une solution aqueuse renfermant des sels de molybdène et de nickel. Le sel de molybdène est l'heptamolybdate d'ammonium $(NH_4)_6Mo_7O_{24}.4H_2O$ et celui de nickel le nitrate de nickel $Ni(NO_3)_2.6H_2O$. Après maturation à température ambiante dans une atmosphère saturée en eau, les extrudés imprégnés sont séchés pendant une nuit à 120°C puis calcinés à 500°C pendant 2 heures sous air sec. La teneur finale en trioxyde de molybdène est de 12,9 % poids du catalyseur fini. La teneur finale en oxyde de nickel NiO est de 1,7 % poids du catalyseur fini.
Les caractéristiques texturales du catalyseur B1 sont reportées dans le tableau 1. On constate notamment que la baisse de la teneur en Ni (catalyseur A1 à B1) ne modifie pas de façon significative les propriétés texturales du catalyseur.

Exemple 5 : Préparation du catalyseur C2 supporté sur le support N° 2 de l'exemple 2.

Nous avons imprégné à sec le support extrudé de l'exemple 2 par une solution aqueuse renfermant des sels de molybdène et de nickel. Le sel de molybdène est l'heptamolybdate d'ammonium $(NH_4)_6Mo_7O_{24}.4H_2O$ et celui de nickel est le nitrate de nickel $Ni(NO_3)_2.6H_2O$. Après maturation à température ambiante dans une atmosphère saturée en eau, les extrudés imprégnés sont séchés pendant une nuit à 120°C puis calcinés à 500°C pendant 2 heures sous air sec. La teneur finale en trioxyde de molybdène est de 9,7 % poids du catalyseur fini. La teneur finale en oxyde de nickel NiO est de 3,2 % poids du catalyseur fini.
Les caractéristiques texturales du catalyseur C2 sont reportées dans le tableau 1.

Exemple 6 : Préparation du catalyseur D2 supporté sur le support N° 2 de l'exemple 2.

Nous avons imprégné à sec le support extrudé de l'exemple 2 par une solution aqueuse renfermant des sels de molybdène. Le sel de molybdène est l'heptamolybdate d'ammonium $(NH_4)_6Mo_7O_{24}.4H_2O$. Après maturation à température ambiante dans une atmosphère saturée en eau, les extrudés imprégnés sont séchés pendant une nuit à 120°C puis calcinés à 500°C pendant 2 heures sous air sec. La teneur finale en trioxyde de molybdène est de 10,1 % poids du catalyseur fini. Le catalyseur ne contient pas d'élément du groupe VIII.
Les caractéristiques texturales du catalyseur D2 sont reportées dans le tableau 1.

Exemple 7 : Comparaison des performances en hydroconversion de résidu en lit bouillonnant.

La performance des catalyseurs A1 à D2 a été comparée au cours d'un test pilote dans une unité de type Robinson-Mahoney, composée de deux réacteurs en série contenant chacun 158 $cm^3$ de catalyseur. Ces réacteurs sont des réacteurs agités modifiés et adaptés à la mise en oeuvre d'un lit bouillonnant. La comparaison des catalyseurs est effectuée sur le résidu sous vide (RSV) Safanyia dont les principales caractéristiques sont reportées dans le tableau 2. Les essais sont réalisés à 410°C, en isotherme, à 156 bars de pression totale utilisant une VVH de 1,2 l charge/l catalyseur/h. Le débit d'hydrogène est tel qu'il respecte le rapport de 800 l/l de charge.
La mise en huile de l'unité est réalisée en utilisant un Gasoil issu de distillation sous vide, ou DSV, dont les caractéristiques sont reportées dans le tableau 2.

Tableau 2

| Charge | DSV | RSV SAFANIYA | PB Boscan |
|---|---|---|---|
| Spec. grav. | 0,9414 | 1,0477 | 1.02 |
| Soufre (% poids) | 2,92 | 5,31 | 5,28 |
| Azote (ppm pds) | 1357 | 4600 | 4540 |
| Viscosité (cSt) | 13,77 | 5110 | 288 |
| Temp. viscosité (°C) | 100 | 100 | 100 |
| Viscosité (cSt) | 38,64 | 285 | |
| Temp. viscosité (°C) | 70 | 150 | 150 |
| C. Conradson (% poids) | | 23,95 | 12,0 |
| Asphalt. C7 (% poids) | | 14,5 | 13,0 |
| Ni (ppm pds) | <2 | 52 | 110 |
| V (ppm pds) | 3,3 | 166 | 1190 |
| D1160 : PI °C | 361 | 496 | 59 |
| D1160 : 05 % vol. °C | 416 | 536 | 239 |
| D1160 : 10 % vol. °C | 431 | 558 | 313 |
| D1160 : 20 % vol. °C | 452 | | 365 |
| D1160 : 30 % vol. °C | 467 | | 486 |
| D1160 : 40 % vol. °C | 479 | | 558 |
| D1160 : 50 % vol. °C | 493 | | |
| D1160 : 60 % vol. °C | 507 | | |
| D1160 : 70 % vol. °C | 522 | | |
| D1160 : 80 % vol. °C | 542 | | |
| D1160 : 90 % vol. °C | 568 | | |
| D1160 : 95 % vol. °C | 589 | | |
| D1160 : PF °C | 598 | 558 | 593 |

La température est augmentée jusqu'à 343°C puis la charge de test, un résidu de distillation sous vide de type Safanyia (RSV), est injectée. La température de réaction est ensuite élevée à 410°C.
Les conditions de l'essai sont fixées en isotherme, ce qui permet de mesurer la désactivation du catalyseur par la comparaison directe des performances à différents âges. Les âges sont exprimés ici en mètres cubes de charge / kilogramme de catalyseur (m3/kg) ce qui représente la quantité cumulée de charge passée sur le catalyseur rapportée au poids de catalyseur chargé.
Les performances en conversion, HDM et HDS sont définies de la façon suivante :

Conversion (%pds) = ((%pds de 550°C$^+$)charge-(%pds 550°C$^+$)recette)/((%pds 550°C$^+$)charge) * 100

HDM (% pds) = ((ppm pds Ni+V)charge-(ppm pds Ni+V)recette)/((ppm pds NI+V)charge) * 100

$$HDS\ (\%\ pds) = ((\%pds\ S)charge-(\%pds\ S)recette)/((\%pds\ S)charge) * 100$$

Pour évaluer la stabilité des produits formés, une mesure selon la méthode « P value Shell » est effectuée sur la fraction 350°C[+] de l'effluent récupéré après test.

Le tableau 3 compare la performance des catalyseurs A1, B1, C2 et D2 en début de test (0,032 m3/kg) ainsi qu'en fin de test (0,445 m3/kg).

Tableau 3

| Catalyseur + Age | Conv (%pds) | HDM (% pds) | HDS (% pds) | P value Shell |
|---|---|---|---|---|
| A1 à 0,032 m3/kg | 55 | 90 | 85 | 1,7 |
| B1 à 0,032 m3/kg | 55 | 90 | 83 | 1,7 |
| A1 à 0,445 m3/kg | 52 | 70 | 56 | 1,4 |
| B1 à 0,445 m3/kg | 52 | 74 | 60 | 1,5 |
| C2 à 0,032 m3/kg | 55 | 80 | 78 | 1,6 |
| D2 à 0,032 m3/kg | 55 | 83 | 64 | 1,6 |
| C2 à 0,445 m3/kg | 52 | 65 | 56 | 1,4 |
| D2 à 0,445 m3/kg | 52 | 65 | 58 | 1,5 |

Le catalyseur B1, conforme à l'invention, se différencie donc du catalyseur A1, non conforme à l'invention, par sa plus faible teneur en Ni. On constate que la diminution de la teneur en Ni n'a pas d'impact sur la conversion de la fraction lourde. On observe au fil du temps que les performances en HDS et en HDM du catalyseur B1 deviennent supérieures à celles du catalyseur A1, c'est à dire que le catalyseur B1 contenant moins de nickel désactive moins vite que le catalyseur A1. La diminution de la teneur en NiO ne détériore pas la stabilité de la fraction 350°C[+] de l'effluent récupéré après test puisque sa P Value Shell reste largement supérieure ou égale à 1,4.

Ce résultat est identique pour les catalyseurs C2, non conforme, et D2, conforme, préparés sur le support N°2 de mésoporosité plus étroite. Le catalyseur D2 ne contenant pas de nickel présente la meilleure performance à 0,445 m3/kg.

Exemple 8 : Comparaison des performances en hydroconversion de résidu en lit fixe.

Les tests ont été menés dans une unité pilote d'hydrotraitement de résidus pétroliers comportant un réacteur tubulaire en lit fixe. Le réacteur est rempli avec un litre de catalyseur. L'écoulement des fluides (résidu + hydrogène) est ascendant dans le réacteur. Après une étape de sulfuration par circulation dans le réacteur d'une coupe gazole additionnée de diméthyl disulfure à une température finale de 350°C, on opère l'unité avec le pétrole brut de Boscan dont les caractéristiques sont reportées dans le tableau 2. Les essais sont réalisés en isotherme à 390°C, 150 bars de pression totale utilisant une WH de 2 l charge/l cata/h. Le débit d'hydrogène est tel qu'il respecte le rapport 1000 l/l de charge. Les conditions de l'essai sont fixées en isotherme, ce qui permet de mesurer la désactivation du catalyseur par la comparaison directe des performances à différents âges. Les âges sont exprimés en heures de fonctionnement sous pétrole brut, le temps zéro étant pris dès l'arrivée à la température du test (390°C).

Les performances en HDS et HDM sont définies de la même façon que dans l'exemple 7 et sont reportées dans le tableau 4. On y reporte également la quantité de métaux déposés sur le catalyseur à l'âge mentionné. Cette quantité est exprimée en poids de Ni+V déposé rapporté au poids du catalyseur neuf. La quantité de Ni+V est calculée à partir du taux d'HDM en considérant que les métaux éliminés de la coupe pétrolière se déposent sur le catalyseur.

Tableau 4

| Catalyseur + Age | HDM (% pds) | HDS (% pds) | Ni+V déposé (g/100 gcata neuf) |
|---|---|---|---|
| A1 à 50 heures | 78 | 60 | 8 |
| B1 à 50 heures | 77 | 55 | 6,5 |
| A2 à 400 heures | 40 | 25 | 50 |
| B2 à 400 heures | 48 | 30 | 60 |

On observe que la diminution de la quantité de nickel de la phase active de 3,2 % poids (catalyseur A1 non conforme) à 1,7 % poids (catalyseur B1 conforme) a un impact très léger sur l'activité initiale, essentiellement sur l'HDS. Par contre, on observe nettement l'intérêt d'une formulation catalytique pauvre en nickel, puisque après 400 heures de fonctionnement dans ces conditions, le catalyseur B1 présente un gain d'activité à la fois en HDM et en HDS. Il a par ailleurs accumulé nettement plus de métaux que le catalyseur A1.

Ainsi, les catalyseurs d'hydroconversion de charges hydrocarbonées, contenant des composés dont le point d'ébullition est supérieur à 520°C et contenant du soufre et des métaux, dont la phase active a une teneur modérée en nickel ont un meilleur comportement dans le temps que les catalyseurs dont la quantité de phase active respecte les proportions usuelles décrites dans l'art antérieur entre l'élément du groupe VIII et l'élément du groupe VIB.

## Revendications

1. Catalyseur comprenant :

   - un support poreux,
   - de 1 à 30 % poids d'au moins un métal catalytique choisi parmi les éléments du groupe VIB du tableau périodique en quantité exprimée en % poids d'oxyde par rapport au poids du catalyseur final et
   - de 0 à moins de 2,2 % poids d'au moins un métal catalytique non noble choisi parmi les éléments du groupe VIII en quantité exprimée en % oxyde par rapport au poids du catalyseur final

   et dans lequel le rapport atomique entre l'élément du groupe VIII non noble et l'élément du groupe VIB est inférieur à 0,4, le volume poreux total mesuré par porosimétrie au mercure est compris entre 0,5 et 1,5 cm$^3$/g, et la distribution des mésopores du support est centrée sur un diamètre compris entre 40 et 170 Å, la surface BET du catalyseur est supérieure à 50 m$^2$/g et le volume poreux du catalyseur dans les pores de diamètre supérieur à 500 Å est d'au moins 0,1 cm$^3$/g.

2. Catalyseur selon la revendication 1 dans lequel la quantité d'éléments du groupe VIII non noble exprimée en % poids d'oxyde par rapport au poids du catalyseur fini est d'au moins 0,1 %.

3. Catalyseur selon l'une des revendications précédentes dans lequel la quantité d'éléments du groupe VIII non noble exprimée en % poids d'oxyde par rapport au poids du catalyseur fini est inférieure à 2 %.

4. Catalyseur selon l'une des revendications précédentes dans lequel la quantité d'éléments du groupe VIII non noble exprimée en % poids d'oxyde par rapport au poids du catalyseur fini est inférieure à 1,9 %.

5. Catalyseur selon l'une des revendications précédentes dans lequel la quantité de métal du groupe VIB exprimée en % poids d'oxyde par rapport au poids du catalyseur fini est comprise entre 5 et 20 %.

6. Catalyseur selon l'une des revendications précédentes dans lequel le métal du groupe VIB est le molybdène ou le tungstène.

7. Catalyseur selon l'une des revendications précédentes dans lequel le métal du groupe VIII non noble est le nickel ou le cobalt.

8. Catalyseur selon l'une des revendications précédentes comprenant du nickel et du molybdène.

9. Catalyseur selon l'une des revendications précédentes comprenant du molybdène.

10. Catalyseur selon l'une des revendications précédentes contenant du soufre.

11. Procédé d'hydroconversion et/ou hydroraffinage de charges hydrocarbonées contenant des composés dont le point d'ébullition est supérieur à 520°C et du soufre utilisant le catalyseur selon l'une des revendications précédentes.

12. Procédé d'hydroconversion et/ou hydroraffinage selon la revendication 11 de charges hydrocarbonées contenant des métaux.

13. Procédé d'hydroraffinage et/ou hydroconversion de charges hydrocarbonées selon la revendication 11 ou 12, opérant en lit fixe à une température comprise entre 320 et 450°C, sous une pression partielle d'hydrogène d'environ 3 MPa à environ 30 MPa, à une vitesse spatiale d'environ 0,05 à 5 volumes de charge par volume de catalyseur et par heure.

14. Procédé d'hydroraffinage et/ou hydroconversion de charges hydrocarbonées selon la revendication 11 ou 12, opérant en lit bouillonnant à une température comprise entre 320 et 470°C, sous une pression partielle d'hydrogène d'environ 3 MPa à environ 30 MPa, à une vitesse spatiale d'environ 0,1 à 10 volumes de charge par volume de catalyseur et par heure.

15. Procédé selon l'une des revendications 11 à 14 tel que la charge employée dans le procédé est choisie dans le groupe formé par les résidus atmosphériques, les résidus sous vide issus de distillation directe, les huiles désasphaltées, les résidus issus de procédés de conversion, ladite charge étant utilisée telle quelle ou diluée par une fraction hydrocarbonée ou un mélange de fractions hydrocarbonées.

16. Procédé selon l'une des revendications 11 à 15 dans lequel une partie des effluents convertis peut être recyclée en amont de l'unité opérant le procédé.


**Patentansprüche**

1. Katalysator, umfassend:

   - einen porösen Träger,
   - von 1 bis 30 Gew.-% mindestens eines katalytischen Metalls, ausgewählt aus den Elementen der Gruppe VIB des Periodensystems, in einer Menge, ausgedrückt in Gew.-% Oxid im Verhältnis zum Gewicht des Endkatalysators, und
   - von 0 bis weniger als 2,2 Gew.-% mindestens eines katalytischen Nicht-Edelmetalls, ausgewählt aus den Elementen der Gruppe VIII, in einer Menge, ausgedrückt in Gew.-% Oxid im Verhältnis zum Gewicht des Endkatalysators, und

   wobei das Atomverhältnis zwischen dem Nicht-Edelmetall-Element der Gruppe VIII und dem Element der Gruppe VIB kleiner ist als 0,4, das poröse Gesamtvolumen, gemessen durch Quecksilber-Porosimetrie, zwischen 0,5 und 1,5 cm$^3$/g liegt, und die Verteilung der Mesoporen des Trägers auf einem Durchmesser zwischen 40 und 170 Å zentriert ist, die BET-Oberfläche des Katalysators größer ist als 50 m$^2$/g, und das poröse Volumen des Katalysators in den Poren mit einem Durchmesser von mehr als 500 Å mindestens 0,1 cm$^3$/g beträgt.

2. Katalysator nach Anspruch 1, wobei die Menge an Nicht-Edelmetall-Elementen der Gruppe VIII, ausgedrückt in Gew.-% Oxid im Verhältnis zum Gewicht des Endkatalysators, mindestens 0,1 % beträgt.

3. Katalysator nach einem der vorhergehenden Ansprüche, wobei die Menge an Nicht-Edelmetall-Elementen der Gruppe VIII, ausgedrückt in Gew.-% Oxid im Verhältnis zum Gewicht des Endkatalysators, kleiner ist als 2 %.

4. Katalysator nach einem der vorhergehenden Ansprüche, wobei die Menge an Nicht-Edelmetall-Elementen der Gruppe VIII, ausgedrückt in Gew.-% Oxid im Verhältnis zum Gewicht des Endkatalysators, kleiner ist als 1,9 %.

5. Katalysator nach einem der vorhergehenden Ansprüche, wobei die Menge an Metall der Gruppe VIB, ausgedrückt in Gew.-% Oxid im Verhältnis zum Gewicht des Endkatalysators, zwischen 5 und 20 % beträgt.

6. Katalysator nach einem der vorhergehenden Ansprüche, wobei das Metall der Gruppe VIB Molybdän oder Wolfram ist.

7. Katalysator nach einem der vorhergehenden Ansprüche, wobei das Nicht-Edelmetall der Gruppe VIII Nickel oder Kobalt ist.

8. Katalysator nach einem der vorhergehenden Ansprüche, umfassend Nickel und Molybdän.

9. Katalysator nach einem der vorhergehenden Ansprüche, umfassend Molybdän.

**10.** Katalysator nach einem der vorhergehenden Ansprüche, enthaltend Schwefel.

**11.** Verfahren zur Hydrokonversion und/oder Hydroraffination von Kohlenwasserstoffchargen, die Verbindungen, deren Kochpunkt größer ist als 520 °C, und Schwefel enthalten, unter Verwendung des Katalysators nach einem der vorhergehenden Ansprüche.

**12.** Verfahren zur Hydrokonversion und/oder Hydroraffination nach Anspruch 11 von Kohlenwasserstoffchargen, die Metalle enthalten.

**13.** Verfahren zur Hydrokonversion und/oder Hydroraffination von Kohlenwasserstoffchargen nach Anspruch 11 oder 12, wobei dieses in einem Festbett bei einer Temperatur zwischen 320 und 450 °C, unter einem Wasserstoff-Partialdruck von ungefähr 3 MPa bis ungefähr 30 MPa, bei einer Raumgeschwindigkeit von ungefähr 0,05 bis 5 Volumen der Charge pro Volumen des Katalysators und pro Stunde betrieben wird.

**14.** Verfahren zur Hydrokonversion und/oder Hydroraffination von Kohlenwasserstoffchargen nach Anspruch 11 oder 12, wobei dieses in einem wallenden Bett bei einer Temperatur zwischen 320 und 470 °C, unter einem Wasserstoff-Partialdruck von ungefähr 3 MPa bis ungefähr 30 MPa, bei einer Raumgeschwindigkeit von ungefähr 0,1 bis 10 Volumen der Charge pro Volumen des Katalysators und pro Stunde betrieben wird.

**15.** Verfahren nach einem der Ansprüche 11 bis 14, wobei die in dem Verfahren verwendete Charge ausgewählt wird aus der Gruppe, die von atmosphärischen Rückständen, Rückständen im Vakuum aus einer direkten Destillation, desasphaltierten Ölen, Rückständen aus Konversionsverfahren gebildet wird, wobei die Charge als solche, oder mit einer Kohlenwasserstofffraktion oder einer Mischung von Kohlenwasserstofffraktionen verdünnt, verwendet wird.

**16.** Verfahren nach einem der Ansprüche 11 bis 15, wobei ein Teil der konvertierten Abflüsse stromaufwärts von der Einheit, die das Verfahren betreibt, rückgeführt werden kann.

**Claims**

**1.** Catalyst comprising

- a porous substrate,
- 1 to 30% by weight of at least one catalytic metal selected from among the elements of group VIB of the periodic table in a quantity expressed in % by weight of oxide relative to the weight of the final catalyst, and
- 0 to at least 2.2% by weight of at least one non-noble catalytic metal selected from among the group VIII elements in a quantity expressed in % of oxide relative to the weight of the final catalyst

and wherein the atomic ratio between the non-noble group VIII element and the group VIB element is less than 0.4, the total pore volume, measured by mercury porosimetry, is between 0.5 and 1.5 cm$^3$/g, and the distribution of mesopores of the substrate is centered on a diameter of between 40 and 170 Å, the BET surface area is greater than 50 m$^2$/g, and the pore volume in the pores with diameter greater than 500 Å is at least 0.1 cm$^3$/g.

**2.** Catalyst according to claim 1, wherein the quantity of non-noble group VIII elements expressed in % by weight of oxide relative to the weight of the finished catalyst is at least 0.1%.

**3.** Catalyst according to one of the preceding claims, wherein the quantity of non-noble group VIII elements expressed in % by weight of oxide relative to the weight of the finished catalyst is less than 2%.

**4.** Catalyst according to one of the preceding claims, wherein the quantity of non-noble group VIII elements expressed in % by weight of oxide relative to the weight of the finished catalyst is less than 1.9%.

**5.** Catalyst according to one of the preceding claims, wherein the quantity of group VIB metal expressed in % by weight of oxide relative to the weight of the finished catalyst is between 5 and 20%.

**6.** Catalyst according to one of the preceding claims, wherein the group VIB metal is molybdenum or tungsten.

**7.** Catalyst according to one of the preceding claims, wherein the non-noble group VIII metal is nickel or cobalt.

8. Catalyst according to one of the preceding claims comprising nickel and molybdenum.

9. Catalyst according to one of the preceding claims comprising molybdenum.

10. Catalyst according to one of the preceding claims containing sulfur.

11. Process of hydroconversion and/or hydrorefining of hydrocarbon-containing feedstocks containing compounds whose boiling point is higher than 520°C and sulfur using the catalyst according to one of the preceding claims.

12. Process of hydroconversion and/or hydrorefining according to claim 11 of hydrocarbon-containing feedstocks containing metals.

13. Process of hydrorefining and/or hydroconversion of hydrocarbon-containing feedstocks according to claim 11 or 12, operating in a fixed bed at a temperature of between 320 and 450°C, under a partial hydrogen pressure of about 3 MPa to about 30 MPa, at a volumetric flow rate of about 0.05 to 5 volumes of feedstock per volume of catalyst and per hour.

14. Process of hydrorefining and/or hydroconversion of hydrocarbon-containing feedstocks according to claim 11 or 12, operating in a boiling bed at a temperature of between 320 and 470°C, under a partial hydrogen pressure of about 3 MPa to about 30 MPa, at a volumetric flow rate of about 0.1 to 10 volumes of feedstock per volume of catalyst and per hour.

15. Process according to one of claims 11 to 14 such that the feedstock used in the process is selected from the group formed by atmospheric residues, vacuum residues resulting from direct distillation, deasphalted oils, residues resulting from conversion processes, said feedstock being used as is or diluted by a hydrocarbon-containing fraction or a mixture of hydrocarbon-containing fractions.

16. Process according to one of claims 11 to 15, wherein part of the converted effluents can be recycled upstream from the unit performing the process.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4880525 A
- EP 1060794 A
- US 5397456 A
- US 5827421 A
- EP 0704239 A1

**Littérature non-brevet citée dans la description**

- **BRUNAUER ; EMMETT ; TELLER.** *J. Am. Chem. Soc.,* 1938, vol. 60, 309-316